# EUROPEAN PATENT APPLICATION

(11) **EP 1 631 102 A1**
(43) Date of publication of application: **01.03.2006**
(21) Application number: 04020191.5
(22) Date of filing: 25.08.2004
(51) Int. Cl.: H04Q 7/38, H04M 3/56

(54) **Electronic equipment for a wireless communication system to transmit and receive information content during ongoing communication**

(71) Applicant: Sony Ericsson Mobile Communications AB, 221 88 Lund (SE)
(72) Inventor: Ramsten, Fredrik, 21424 Malmö (SE); Hansson, Emil, 21159 Malmö (SE)
(74) Representative: Körber, Martin Hans

(57) **Abstract**

The present invention relates to an electronic equipment for a wireless communication system enabling communication within the wireless communication system by transmitting a first audio signal and/or a first video signal, and enabling transmission of information content within the wireless communication system by transmitting a second video signal and/or a second audio signal, comprising an encoder (5) for encoding audio and/or video signals to be transmitted within the wireless communication system and an audio mixing means (13) for interleaving said second audio signal with said first audio signal and submitting the interleaved audio signal to the encoder (5).

The present invention further relates to a method for executing the steps on the electronic equipment.

## Description

### TECHNICAL FIELD OF THE INVENTION

The present invention relates to an electronic equipment for a wireless communication system. Specifically, the present invention relates to the problem of keeping up a communication and at the same time transmitting and receiving information content.

### DESCRIPTION OF RELATED ART

At present, most electronic equipments for a wireless communication system, such as mobile telephones, pagers, personal digital assistants, electronic organisers and so forth, either enable the user to set up a communication to another person, i.e. a call, a video conference or the like, or to transmit and receive information content such as images, videos, sound, drawings, sketches, text, documents and the like. Thereby, it is not possible to keep up the communication and at the same time transmit and/or receive information content in order to share and discuss information content in real-time like in a normal face to face conversation. Therefore, it is not possible to get instant feedback on the information content, since it is not possible to send information content to the other party during an ongoing communication.

### SUMMARY

The general problem with the state of the art electronic equipment for a wireless communication system as outlined above, is, that for sending or receiving information content the communication would have to be interrupted. Known electronic equipments do not provide the functionality of sending information content during an ongoing communication.

The object of the present invention is therefore to provide an electronic equipment for a wireless communication system as well as a method for an electronic equipment for a wireless communication system, which enable the user to transmit and receive information content during an ongoing communication thereby getting an instant feedback from the person he is communicating with.

The above-mentioned object is achieved by an electronic equipment for a wireless communication system according to claim 1.

The present invention relates to an electronic equipment for a wireless communication system enabling communication within the wireless communication system by transmitting a first audio signal and a first video signal, and enabling transmission of information content within the wireless communication system by transmitting a second video signal and a second audio signal and comprising an encoder for encoding audio and video signals to be transmitted within the wireless communication system and an audio mixing means for interleaving said second audio signal with said first audio signal and submitting the interleaved audio signal to the encoder.

The above-mentioned object is further achieved by a method for an electronic equipment for a wireless communication system according to claim 8.

The present invention further relates to an electronic equipment for wireless communication enabling communication within the wireless communication system by transmitting a first audio signal and a first video signal, and enabling transmission of information content within the wireless communication system by transmitting a second video signal and a second audio signal and comprising the steps of encoding audio and video signals to be transmitted within the wireless communication system by an encoder and interleaving said second audio signal with said first audio signal and submitting the interleaved audio signal to the encoder.

It should be emphasised that the term "comprises/comprising" when used in the specification is taken to specify the presence of stated features, integers, steps or components but does not preclude the presence or edition of one or more other features, integers, steps, components or groups thereof.

In context of the present application and the present invention, the term "electronic equipment for a wireless communication system" includes any kind of portable radio communication equipment. The term "portable radio communication equipment" includes all equipments such as mobile telephones, mobile self-phones, pagers, personal digital assistants, communicators, i.e. electronic organisers, smart phones or the like. The term "wireless communication system" relates to any kind of communication or tele-communication system which enables the wireless transfer of information.

Preferably a file system contains a file consisting of said second audio signal and/or said second video signal.

Further, preferably an audio converter converts said second audio signal to a predefined format.

Advantageously, a separation means separates the second video signal from the second audio signal.

Further, advantageously a selecting means selects said second video signal or said first video signal and submits the selected video signal to the encoder.

Preferably, the selecting means selects the first video signal only when no second video signal is present.

Further, preferably a video converter converts said second video signal to a predefined format.

### BRIEF DESCRIPTION OF THE DRAWINGS

Embodiments of the invention will now be described, by way of example only, which reference to the accompanying drawings in which:
Fig. 1 is a block diagram showing schematically the elements of the system,
Fig. 2a and 2b are flow charts showing schematically the elements of an image transmitting system,
Fig. 3a and 3b are a block diagram showing schematically the elements of an audio transmitting system,
Fig. 4 is a block diagram showing schematically the elements of a video transmitting system,
Fig. 5 is a flow chart showing schematically the process steps according to the method of the present invention and
Fig. 6a to 6d are schematic use of different display images during the process.

### DETAILED DESCRIPTION OF EMBODIMENT

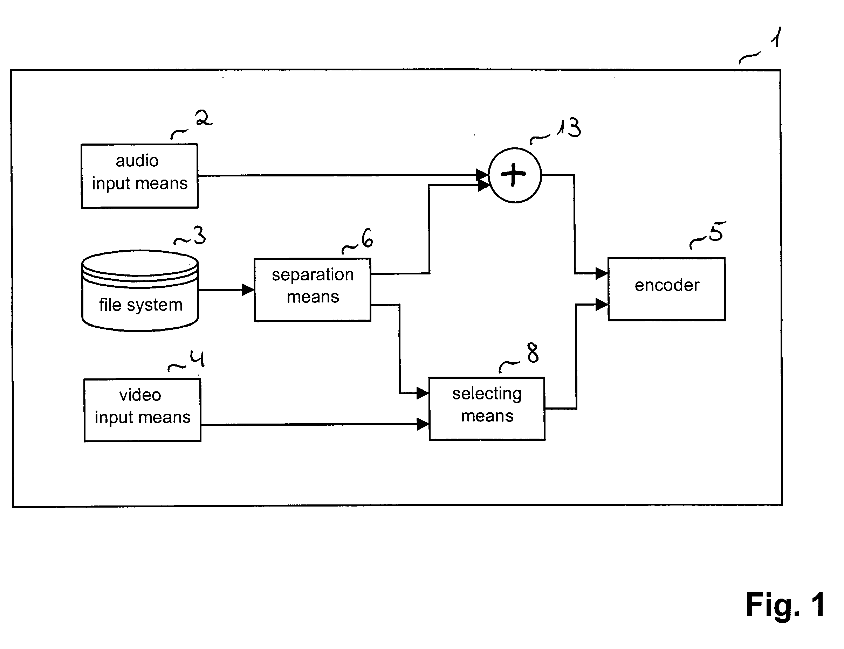

Fig. 1 shows a schematic block diagram of the system according to the present invention. An electronic equipment 1 comprises an audio input means 2, which may be a microphone or, a voice recognition means or the like, for accepting voice, sounds, noise or other audio signals from the environment of the electronic equipment 1. A video input means 4, which may be a camera or the like, serves for accepting videos, still images or other video signals. In addition, a file system 3 contains information content, that is files consisting of audio and/or video components including images, videos, sound, drawings, sketches, text, documents and the like. Hereby, "audio" according to the present invention relates to acoustic data, like speech, music, noises or the like and "video" relates to optical data like images, texts and the like. Combined audio and video data may be music videos, a video conference or the like.

The electronic equipment is able to transmit and receive information in a wireless communication system, such as e.g. the UMTS, GPRS; GSM or any other available wireless telecommunication system. The electronic equipment 1 further comprises an encoder 5 for encoding signals which have to be transmitted within the wireless communication system. Hereby, the encoder 5 encodes an audio signal and a video signal which then are multiplexed and transmitted within the wireless communication system.

When a communication between two electronic equipments is set up, in a second phase negotiation has to be accomplished as the electronic equipments have to agree in which directions data and/or information will be exchanged, what picture resolution to use and what type of encoding/decoding for video and audio that will be used during the video call has to be provided.

During a normal communication the voice signals, e.g. speech, from the user are received by the audio input means 2 and this first audio signal is submitted to the encoder 5. If a video conference has to be established, then also the image or video signals, e.g. the face of the user, the ambience or the like, are received by the video input means 4 and this first video signal is submitted to the decoder. Hereby, the first audio and/or the first video signal serve for keeping up a vocal, visual or combined vocal and visual communication.

During said wireless communication the user can select a file from the file system 3 he wants to transmit to the person he is communication with. The file is then submitted to a separation means 6 where the file is split into a second audio signal and a second video signal.
In an audio mixing means 13 the second audio signal is then interleaved with said first audio signal deriving from the audio input means 2 and the interleaved audio signal is then submitted to the encoder 5.
The second video signal deriving from the file and the first video signal deriving from the video input means 4 are submitted to an selecting means 8. The selecting means 8 then selects which of the video signals is submitted to the encoder 5. If no second video signal from the file is present, then the selecting means 8 will select the first video signal deriving from the video input means. Otherwise if a second video signal from the file is submitted to the selecting means 8, then the selecting means 8 will select the second video signal and submit it to the encoder 5.

Thereby, the communication can be kept up and at the same time information content can be transmitted. The information content hereby consists of audio and/or video components including images, videos, sound, drawings, sketches, text, documents and the like. The information content may either be an audio file, a video file or a combined audio and video file.

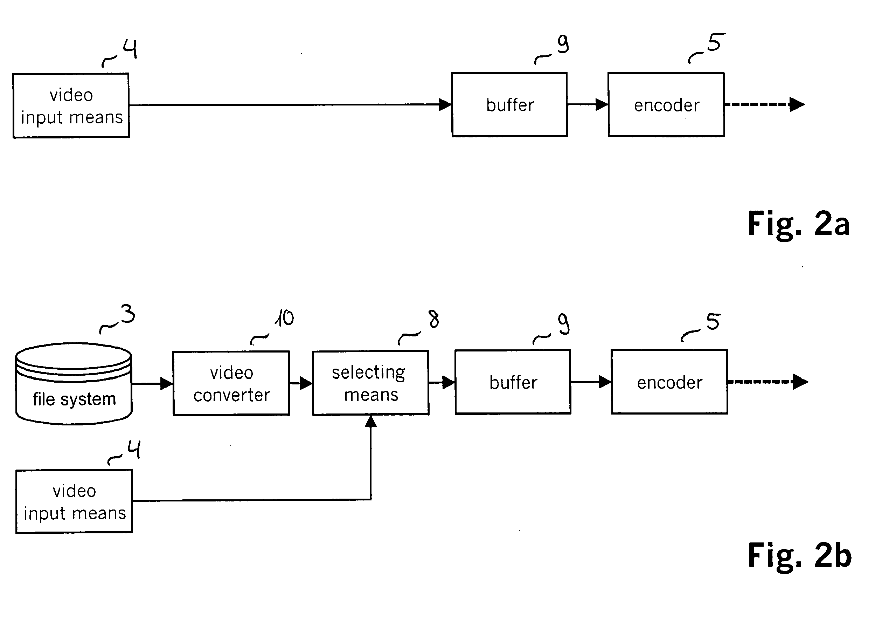

Fig. 2a shows a block diagram of a system used during an ordinary video call. Hereby, the video input means 4 serves for taking pictures or videos from objects persons or the like. During an ordinary video call the images are already in the negotiated video transmit format and a buffer 9 can be filled with frames containing the images. The encoder 5 then reads from the buffer 9 and encodes the frames in order to submit them to the transceiver (not shown).

Fig. 2b shows a schematic block diagram of a system where a still image is replacing the camera images. When the user decides to transmit an image contained in the file system 3 then the file is loaded from the file system 3 and afterwards converted by a video converter 10. The video converter 10 for example converts the file for example into JPEG decompression. If the file has a different resolution then the transmitted video, i.e. QCIF 176x144 it has to be resized or cropped to the outgoing format. The video signal is then sent to the selecting means 8, which then will select the second video signal from the file to be transmitted to the buffer 9. The buffer 9 is then filled with frames containing the converted image. The encoder 5 then reads from the buffer 9 and encodes the frame to the negotiated format, i.e. H.263. The encoded image can then be multiplexed along with the audio signal and transmitted to the other electronic equipment 1 just like during a normal video call, that is the audio from the microphone is still transmitted along with the video containing the still image.

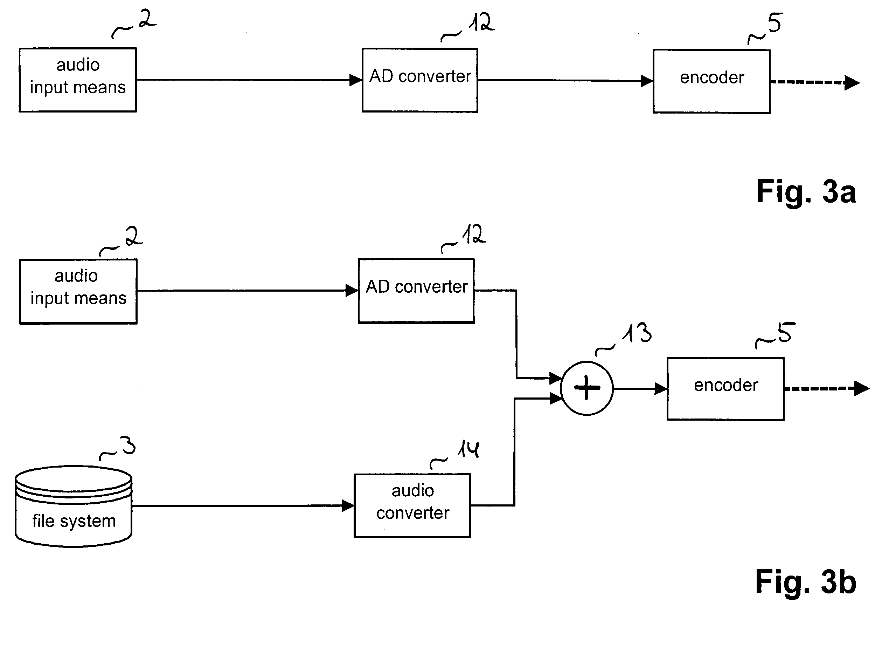

Fig. 3a shows a schematic block diagram of a system for transmitting a simple audio signal received the audio input means 2 of the electronic equipment 1. For example during a normal call or a video call the speech has to be transmitted. Therefore, the audio input means 2 integrated in the electronic equipment 1 submits the received voice signals to an AD converter 12 which then converts the analogue signal to digital signals. Afterwards the signal is encoded by the encoder 5 and submitted to the transceiver (not shown).

Fig. 3b shows a schematic block diagram of the system used for sharing a sound file during an ongoing communication. If the user wants to transmit an audio file then the audio file is fetched from the file system 3 and afterwards an audio converter 14 converts to file to an appropriate format. Afterwards the converted file is then mixed with the audio data received from the microphone 11 in the audio mixing means 13 by using audio channel mixing. The combined audio data is then encoded to the negotiated format by the encoder 5, i.e. AMR, multiplexed with the video and transmitted as during a standard video call.

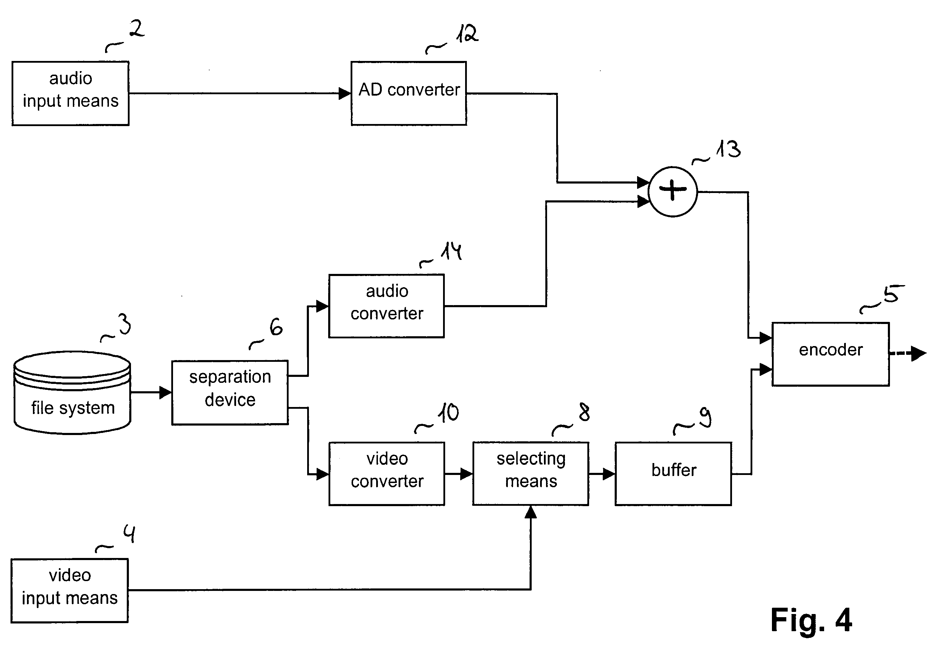

Fig. 4 shows a schematic block diagram of a system for transmitting a video clip. If the user decides to transmit a video clip then video is fetched from the file system 3 and a separation device 6 separates the audio signal from the video signal. As explained above the second audio signal derived from the file in the audio converter 14 is then converted to the appropriate format and afterwards is mixed in the audio mixing means 13 with the sampled first audio signal from the audio input means 2. After separating the second audio signal from the second video signal in the separation device 6 the second video signal is converted by a video converter 10 and afterwards submitted to the selecting means 8. The selecting means then selects the second or the first video signals and stores the selected signal in the buffer 9. The encoder 5 then encodes the video signal from the buffer 9 and the audio signal from the audio mixing means and submits them to the transceiver (not shown).

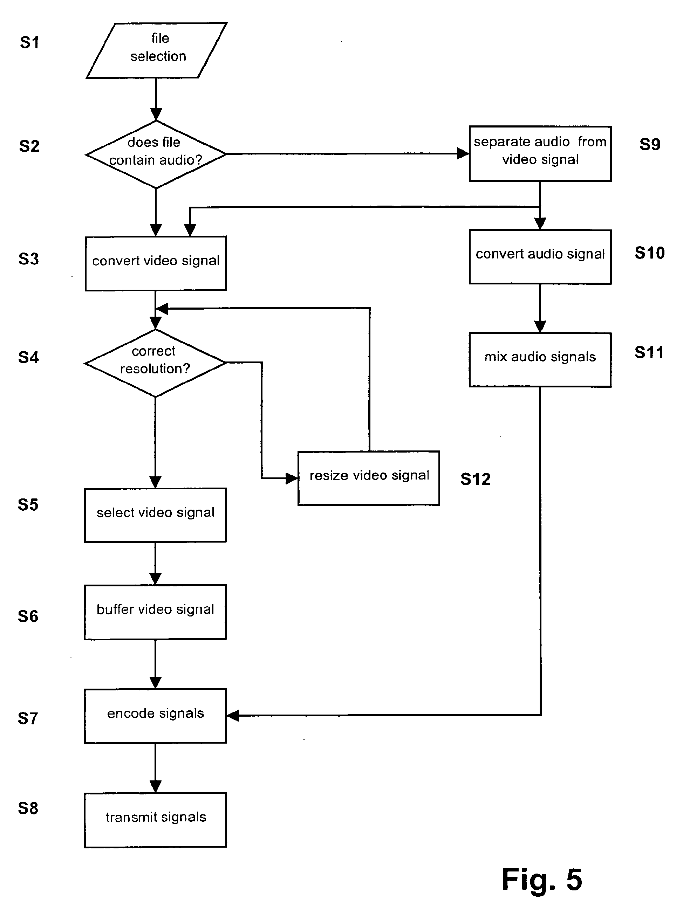

Fig. 5 shows a flow chart of the steps according to the process of the present invention. In step S1, the user selects a file from the file system 3 he wants to transmit and the selection is accepted by the electronic equipment 1. In the next step S2 it is checked, whether the selected file contains an audio signal. If the file does not contain an audio signal then in step S3 the video signal is converted to the needed format. Then in step S4 it is checked, whether the converted video signal has the correct resolution. If the video signal does not have the correct resolution then the video is resized in step S12. The process then goes back to step S4 where it is checked again whether the video has the correct resolution. If in step S4 it is decided, that the video has the correct resolution then video submitted to the selecting means in step S5 and the selected video signal is buffered in the buffer 9 in step S6. In the next step S7 the buffered signals are encoded and in step S8 they are transmitted by the transceiver.

If in step S2 it is determined that the file contains an audio signal then in step S9 the audio signal is separated from the video or image signal. The video or image signal is then processed according to the step S3 and following as explained above. The audio signal in step S10 is converted to the appropriate format and in step S11 it is mixed with the audio signal from the microphone in the audio mixing means 13. The audio signals are then encoded by the encoder 5 in step S6 and afterwards also transmitted in step S7 by the transceiver.

If during a voice call when only a first audio signal is submitted in order to keep up the communication a video content or a combined audio/video content is submitted, then the electronic equipment 1 will not switch into the video mode for communication but continue the voice call. In the same way if during a video conference when a combined first audio and video signal is submitted to keep up the communication an audio content is submitted, then the electronic equipment will keep up the video conference and will not switch into a voice call.
It may be provided an option for the user to switch between different communication modes, e.g. between voice call and video conference, but the electronic equipment will not switch automatically.

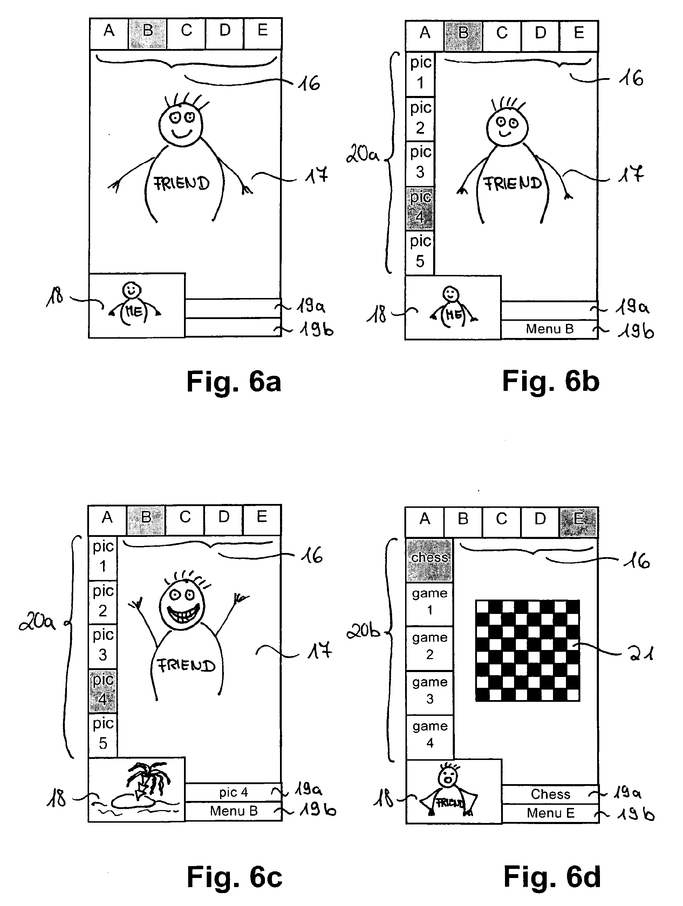

Fig. 6a to 6d show different display images during the process serving as an user interface. During a video call on the main display part 17 the face of the other person to which the user of the electronic equipment 1 is communicating can be shown. Further a control display part 18 may be provided where the user can see what at present the other person to which he is communicating is seeing, e.g. that is his own face during a video call or images or the like he wants to share or he is transmitting. The display further comprises a main menu 16 through which the user can scroll and the actual selectable menu is high-lighted in a form for example enlarged or the colour is changed. In the present example the user can select between menus A, B, C, D, or E. In the present example the menu B actually can be selected. The display may further comprise information lines 19A and 19B in order to inform the user on the actual selected menu or file. Selectable menus may be the feature of a video call or a normal call, sharing pictures or text, sharing videos, sharing sounds or playing interactive video games with other persons. If, for example, the user has selected as shown in Fig. 6b the menu for sharing pictures then in a sub-menu 20a the pictures contained in the file system 3 are shown. By scrolling through the pictures the actual selectable picture again is high-lighted, which in the present example is picture 4. Fig. 6c shows the situation where the picture 4 is selected and has been transmitted to the other person. In the control display part 18 the user can see what the other person actually is viewing, that is in the present example the picture 4, and in the main display part 17 at the same time he can see the face of the other person and the reaction of the other person on the picture he has just received.

Another example is shown in Fig. 6d, where instead of sharing pictures the user has selected the main menu E, which in the present example is the option for playing games. After selecting the main menu E the sub-menu 20b again is shown with different games the user can select. In the present example the user has selected the game chess and therefore a chess board 21 is shown in the main display part 17. In this case it may be possible to show the face of the other person in the control display part 18 in order to play the game chess and at the same time see the reactions of the person he is playing with.

A possibility of scrolling through the menu may be a joy-stick or a special key pad having direction keys and a selection key for scrolling through the menus and selecting the actual high-lighted menu.

With the present invention the users of mobile equipments can either create a situation like in a conference where while keeping eye contact with each other they can discuss on sketches, diagrams or the like or the users can play games and share pictures at the same time having the impression of a normal face to face conversation. This solution gives the user the possibility to talk, look at pictures, play games and experience each other's face expressions in real time. The user can spontaneously select content while still having eye contact. It is very easy to select content in real time and at the same time have control over what the user is actually showing to the other party. The solution further is comfortable with existing video conferencing, applications, and infrastructure.

## Claims

1. Electronic equipment for a wireless communication system enabling communication within the wireless communication system by transmitting a first audio signal and/or a first video signal, and enabling transmission of information content within the wireless communication system by transmitting a second video signal and/or a second audio signal, comprising
an encoder (5) for encoding audio and/or video signals to be transmitted within the wireless communication system and
an audio mixing means (13) for interleaving said second audio signal with said first audio signal and submitting the interleaved audio signal to the encoder (5).

2. Electronic equipment according to claim 1,
**characterised in**
**that** a file system (3) contains a file consisting of said second audio signal and/or said second video signal.

3. Electronic equipment according to any of claims 1 or 2,
**characterised in**
**that** an audio converter (14) converts said second audio signal to a predefined format.

4. Electronic equipment according to any of claims 1 to 3,
**characterised by**
a separation means (6) for separating the second video signal from the second audio signal.

5. Electronic equipment according to any of claims 1 to 4,
**characterised by**
a selecting means (8) for selecting said second video signal or said first video signal and submitting the selected video signal to the encoder (5).

6. Electronic equipment according to claim 5,
**characterised in**
**that** the selecting means (8) selects the first video signal only when no second video signal is present.

7. Electronic equipment according to any of claims 1 to 6,
**characterised in**
**that** a video converter (10) converts said second video signal to a predefined format.

8. Method for a mobile equipment for a wireless communication system enabling communication within the wireless communication system by transmitting a first audio signal and/or a first video signal, and enabling transmission of information content within the wireless communication system by transmitting a second video signal and/or a second audio signal comprising the steps of
encoding audio and/or video signals to be transmitted within the wireless communication system by an encoder (5) and
interleaving said second audio signal with said first audio signal and submitting the interleaved audio signal to the encoder (5).

9. Method according to claim 8,
**characterised by**
storing a file consisting of said second audio signal and/or said second video signal in a file system (3).

10. Method according to claim 8 or 9,
**characterised in**
converting said second audio signal to a predefined format.

11. Method according to any of claims 8 to 10,
**characterised by**
separating the second video signal from the second audio signal.

12. Method according to any of claims 8 to 12,
**characterised in**
selecting said second video signal or said first video signal and submitting the selected video signal to the encoder (5).

13. Method according to claim 12,
**characterised in**
selecting the first video signal only when no second video signal is present.

14. Method according to any of claims 8 to 13,
**characterised in**
converting said second video signal to a predefined format.
